(19) Europäisches Patentamt

European Patent Office

Office européen des brevets

(11) **EP 4 686 394 A1**

(12) **EUROPEAN PATENT APPLICATION**

(43) Date of publication:
**04.02.2026 Bulletin 2026/06**

(21) Application number: **25192670.5**

(22) Date of filing: **29.07.2025**

(51) International Patent Classification (IPC):
**A01D 41/127** (2006.01)     **A01D 45/02** (2006.01)

(52) Cooperative Patent Classification (CPC):
**A01D 41/127; A01D 45/021**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **29.07.2024 US 202463676490 P**

(71) Applicants:
• **CNH Industrial Belgium N.V.**
  **8210 Zedelgem (BE)**
• **CNH Industrial America LLC**
  **New Holland, PA 17557 (US)**

(72) Inventors:
• **Martin, Jethro**
  **New Holland, 17557 (US)**
• **Linde, Karl**
  **New Holland, 17557 (US)**
• **Vanlerberghe, Jasper**
  **8210 Zedelgem (BE)**
• **Kukkala, Sai Niranjan Reddy**
  **8210 Zedelgem (BE)**

(74) Representative: **CNH Industrial IP Department**
**Leon Claeysstraat 3A**
**8210 Zedelgem (BE)**

(54) **CORN EAR MONITORING SYSTEM FOR AN AGRICULTURAL HARVESTER**

(57)     A corn ear monitoring system (300) for an agricultural harvester (100) includes a controller (304) having a memory (308) and a processor (306). The controller (304) is configured to receive an image of an ear of corn (400) in contact with a first side (318) of a transparent panel (316) from a camera (302) positioned on a second side (320) of the transparent panel (316). The controller (304) is also configured to determine a determined width $(D_D)$ of the ear of corn (400) based on a distance (L) between the camera (302) and the first side (318) of the transparent panel (316) and a monitored width $(D_M)$ of the ear of corn (400) within the image.

FIG. 3

Processed by Luminess, 75001 PARIS (FR)

## Description

BACKGROUND

The present disclosure relates generally to a corn ear monitoring system for an agricultural harvester.
An agricultural harvester may be used to harvest agricultural crops, such as barley, beans, beets, carrots, corn, cotton, flax, oats, potatoes, rye, soybeans, wheat, or other plant crops. The agricultural harvester may include a header, which may be configured to efficiently harvest certain types of crops. For example, a corn header may be configured to efficiently harvest corn. The corn header may include row units that include components configured to separate ears of corn from stalks as the agricultural harvester travels through a field. Augers carry the ears of corn toward a processing system of the agricultural harvester, and the stalks are deposited on the field.
Each row unit is configured to separate the corn ear from the stalk, carry the corn ear toward a respective auger, and direct the stalk to the field. For example, each row unit may include a pair of feed rollers configured to grip the stalk and to rotate in opposite directions, thereby driving the stalk rearwardly and toward the field. Each row unit may also include a pair of deck plates positioned over the pair of feed rollers. The pair of deck plates are separated from one another along a lateral axis to define a gap. The spacing between the pair of deck plates may be manually controlled so that the gap is sized to enable the stalk to pass through the gap and to block the corn ear from passing through the gap. Unfortunately, as crop conditions (e.g., the size of corn ears) vary throughout the field, an operator may have difficulty adjusting the spacing between the deck plates to effectively block the ears of corn from passing through the gap while enabling the stalk to pass through the gap.

BRIEF DESCRIPTION

In certain embodiments, a corn ear monitoring system for an agricultural harvester includes a controller having a memory and a processor. The controller is configured to receive an image of an ear of corn in contact with a first side of a transparent panel from a camera positioned on a second side of the transparent panel. The controller is also configured to determine a determined width of the ear of corn based on a distance between the camera and the first side of the transparent panel and a monitored width of the ear of corn within the image.

BRIEF DESCRIPTION OF THE DRAWINGS

These and other features, aspects, and advantages of the present disclosure will become better understood when the following detailed description is read with reference to the accompanying drawings in which like characters represent like parts throughout the drawings, wherein:

FIG. 1 is a side view of an embodiment of an agricultural harvester having a corn header;

FIG. 2 is a perspective view of an embodiment of a corn header that may be employed within the agricultural harvester of FIG. 1;

FIG. 3 is a perspective front view of a portion of the corn header of FIG. 2; and

FIG. 4 is a schematic diagram of an embodiment of a corn ear monitoring system that may be employed within the agricultural harvester of FIG. 1.

DETAILED DESCRIPTION

One or more specific embodiments of the present disclosure will be described below. In an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.
When introducing elements of various embodiments of the present disclosure, the articles "a," "an," "the," and "said" are intended to mean that there are one or more of the elements. The terms "comprising," "including," and "having" are intended to be inclusive and mean that there may be additional elements other than the listed elements. Any examples of operating parameters and/or environmental conditions are not exclusive of other parameters/conditions of the disclosed embodiments.

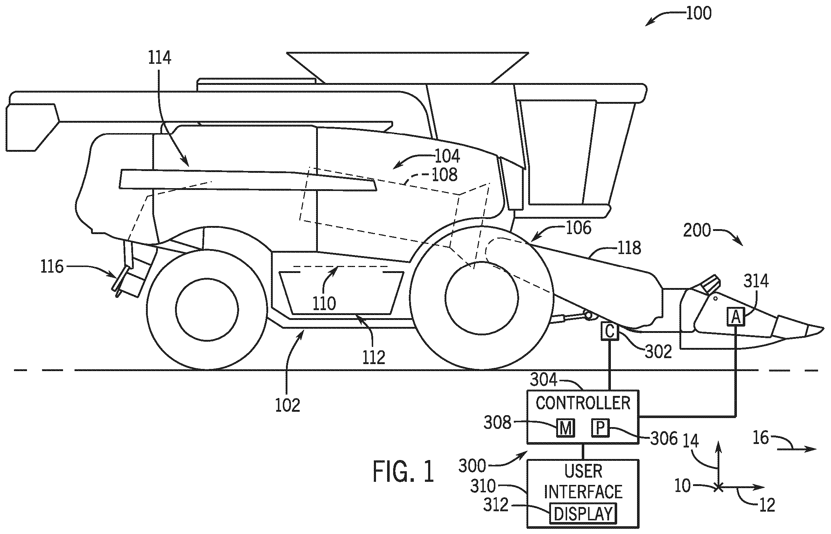

FIG. 1 is a side view of an embodiment of an agricultural harvester 100 having a corn header 200 (e.g., agricultural header). The agricultural harvester 100 includes a chassis 102 configured to support the corn header 200 and an agricultural crop processing system 104. As described in greater detail below, the corn header 200 is configured to separate ears of corn from stalks and to transport the ears of corn toward an inlet 106 of the agricultural crop processing system 104 for further processing of the ears of corn. The agricultural crop processing system 104 receives the ears of corn from the header 200 and separates desired crop material from crop residue. For example, the agricultural crop processing system 104 may include a thresher 108 having a cylindrical threshing rotor that transports the ears of corn in a helical flow path through the agricultural harvester 100. In addition to transporting the ears of corn, the thresher 108 may separate certain desired crop material (e.g., corn kernels) from the crop residue, such as husks and cobs, and enable the desired crop material to flow into a cleaning system 110 located beneath the thresher 108. The cleaning system 110 may remove debris from the desired crop material and transport the desired crop material to a storage compartment 112 within the agricultural harvester 100. The crop residue may be transported from the thresher 108 to a crop residue handling system 114, which may remove the crop residue from the agricultural harvester 100 via a crop residue spreading system 116 positioned at the aft end of the agricultural harvester 100.

As discussed in detail below, the header 200 includes multiple row units configured to separate ears of corn from stalks, thereby leaving bare stalks engaged with the soil. The ears of corn are directed toward the inlet 106. To facilitate discussion, the agricultural harvester 100 and/or its components (e.g., the corn header 200) may be described with reference to a lateral axis or direction 10, a longitudinal axis or direction 12, and a vertical axis or direction 14. The agricultural harvester 100 and/or its components (e.g., the corn header 200) may also be described with reference to a direction of travel 16.

In the illustrated embodiment, the agricultural harvester 100 includes a corn ear monitoring system 300 configured to monitor ears of corn within the agricultural harvester 100. As discussed in detail below, the corn ear monitoring system 300 includes a transparent panel having a first side and a second side, in which the first side is configured to contact an ear of corn. The corn ear monitoring system 300 also includes a camera 302 positioned on the second side of the transparent panel at a distance from the first side of the transparent panel. The camera 302 is configured to output a signal indicative of an image of the ear of corn in contact with the first side of the transparent panel. In the illustrated embodiment, the transparent panel is coupled to a feeder house 118 of the agricultural harvester 100. A feeder is disposed within the feeder house 118, and the feeder is configured to move the ears of corn from the header 200 toward the inlet 106 of the agricultural crop processing system 104. For example, the feeder may include multiple bars that are driven to move along a feeder floor of the feeder house to move the ears of corn toward the inlet 106 of the agricultural crop processing system 104. The feeder floor may include an opening, and the transparent panel may be disposed within the opening, thereby enabling the camera to monitor the ears of corn moving over the feeder floor.

In the illustrated embodiment, the corn ear monitoring system 300 includes a controller 304 communicatively coupled to the camera 302. In certain embodiments, the controller 304 is an electronic controller having electrical circuitry configured to receive the signal indicative of the image of the ear of corn from the camera 302. In the illustrated embodiment, the controller 304 includes a processor, such as the illustrated microprocessor 306, and a memory device 308. The controller 304 may also include one or more storage devices and/or other suitable components. The processor 306 may be used to execute software, such as software for receiving the signal from the camera 302, and so forth. Moreover, the processor 306 may include multiple microprocessors, one or more "general-purpose" microprocessors, one or more special-purpose microprocessors, and/or one or more application specific integrated circuits (ASICs), or some combination thereof. For example, the processor 306 may include one or more reduced instruction set (RISC) processors.

The memory device 308 may include a volatile memory, such as random access memory (RAM), and/or a nonvolatile memory, such as read-only memory (ROM). The memory device 308 may store a variety of information and may be used for various purposes. For example, the memory device 308 may store processor-executable instructions (e.g., firmware or software) for the processor 306 to execute, such as instructions for receiving the signal from the camera 302, and so forth. The storage device(s) (e.g., nonvolatile storage) may include ROM, flash memory, a hard drive, or any other suitable optical, magnetic, or solid-state storage medium, or a combination thereof. The storage device(s) may store data, instructions (e.g., software or firmware for receiving the signal from the camera 302, etc.), and any other suitable data.

In the illustrated embodiment, the corn ear monitoring system 300 includes a user interface 310 communicatively coupled to the controller 304. The user interface 310 is configured to receive input from an operator and to provide information to the operator. The user interface 310 may include any suitable input device(s) for receiving input, such as a keyboard, a mouse, button(s), switch(es), knob(s), other suitable input device(s), or a combination thereof. In addition, the user interface 310 may include any suitable output device(s) for presenting information to the operator, such as speaker(s), indicator light(s), other suitable output device(s), or a combination thereof. In the illustrated embodiment, the user interface 310 includes a display 312 configured to present visual information to the operator. In certain embodiments, the display 312 may include a touchscreen interface configured to receive input from the operator.

In the illustrated embodiment, the controller 304 is configured to determine a determined width of the ear of corn based on the distance between the camera 302 and the first side of the transparent panel and a monitored width of the ear of corn within the image. For example, the controller 304 may determine the monitored width of the ear of corn within the image by determining a number of pixels across the width of the ear of corn within the image and converting the number of pixels to the monitored width based on the number of pixels per unit distance (e.g., mm, cm, inch, etc.). By determining the determined width of the ear of corn based on the distance between the camera 302 and the first side of the transparent panel and the monitored width of the ear of corn within the image, the controller 304 may determine a substantially more accurate corn ear width (e.g., as compared to determining the corn ear width based on the monitored width alone). Once the determined width of the ear of corn is determined, the controller 304 may control the display 312 of the user interface 310 to present a visual representation of the determined width to the operator (e.g., a numerical value of the determined width).

In addition, the controller 304 may control a spacing between deck plates of each row unit of the header 200 based on the determined width of the ear of corn. In the illustrated embodiment, the controller 304 is communicatively coupled to one or more actuators 314 configured to control the spacing between the deck plates of each row unit. For example, while harvesting ears of corn having larger determined widths, the controller 304 may control the actuator(s) 314 to increase the spacing between the deck plates of each row unit, and while harvesting ears of corn having smaller determined widths, the controller 304 may control the actuator(s) 314 to decrease the spacing between the deck plates of each row unit. As a result, each row unit may effectively block ears of corn from passing through the gap between the deck plates while enabling the stalk to pass through the gap, thereby enhancing the efficiency of the harvesting operation.

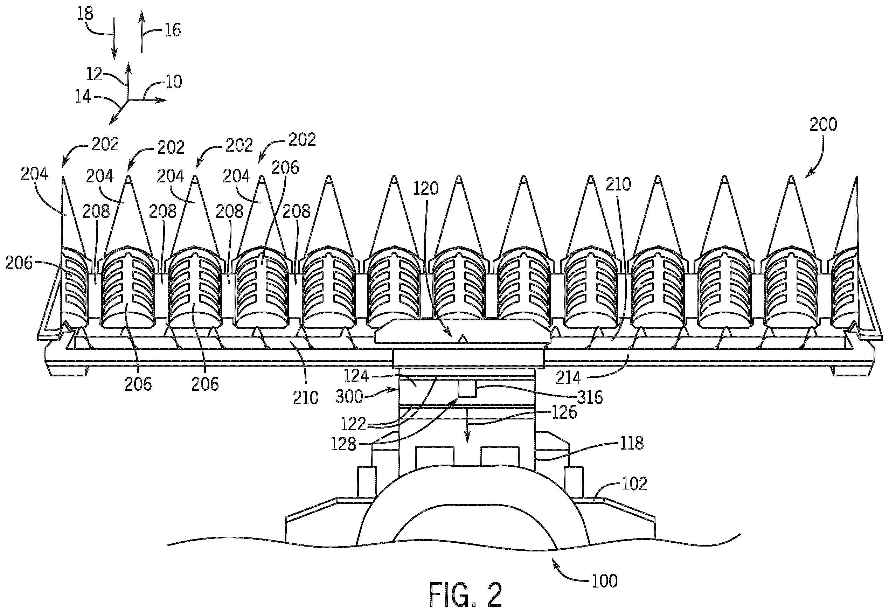

FIG. 2 is a perspective view of an embodiment of a corn header 200 that may be employed within the agricultural harvester 100 of FIG. 1. In the illustrated embodiment, the corn header 200 includes multiple crop engagement assemblies 202 distributed along the lateral axis 10 of the corn header 200. Each crop engagement assembly 202 includes a divider 204 and a hood 206. The dividers 204 are configured to divide rows of a crop (e.g., corn), and the hoods 206 are configured to block crop material from entering internal components of the corn header 200. The dividers 202 may be evenly spaced along the lateral axis 10 of the corn header 200. As the corn header 200 moves along the direction of travel 16, the dividers 204 direct crop material from each row into a respective row unit 208. In addition, the hoods 206 facilitate alignment of the crop material with the row units 208. Accordingly, the hoods 206 direct the crop material through the row units 208.

The row units 208 are configured to separate ears of corn from stalks, thereby leaving bare stalks engaged with the soil (e.g., stubble). The ears of corn may be directed to one of a pair of augers 210 configured to convey the ears of corn inwardly along the lateral axis 10 of the corn header 200 to a feeder 120 at the lateral center of the corn header 200. As illustrated, the augers 210 extend along a substantial portion of the width of the corn header 200 (e.g., along the lateral axis 10 of the corn header 200). The augers 210 may be driven by a driving mechanism (e.g., electric motor, hydraulic motor, etc.). As the agricultural harvester 100 moves through the field, the dividers 204 direct the rows of crops/crop material into the row units 208. The row units 208 engage the crop material within the field and separate the ears of corn from the stalks, and the augers 210 transport the ears of corn to the feeder 120, which directs the ears of corn toward the inlet of the agricultural crop processing system. Each row unit 208 includes feed rollers which pull the stalk of each crop downwardly through the row unit during harvesting. As the stalks of the crops are pulled through the feed rollers, the ears are separated from the stalks and are conveyed toward the augers 210.

In addition to pulling the stalks of the crops downwardly, the feed rollers drive the stalks rearwardly (e.g., along a rearward direction 18 opposite the direction of travel 16) relative to a frame 214 of the corn header 200. Due to the movement of the agricultural harvester 100, the frame 214 of the corn header 200 is driven to move forwardly along the direction of travel 16. The difference between the forward speed of the corn header frame 214 relative to the field and the rearward speed of the stalks relative to the corn header frame 214 may be referred to as the conveyance speed. A conveyance speed of about zero may enhance the efficiency of the harvesting operation (e.g., by reducing the loads/forces applied to the ears of corn) and/or may enhance subsequent agricultural operation(s) (e.g., by enhancing the engagement of the bare stalks with the soil).

The feeder 120 is disposed within the feeder house 118, and the feeder 120 is configured to move the ears of corn from the header 200 toward the inlet of the agricultural crop processing system. In the illustrated embodiment, the feeder 120 includes multiple bars 122 coupled to one or more chains or belts. The chain(s) or belt(s) may be driven to rotate, thereby moving the bars 122 along the feeder floor 124 in a direction 126 toward the inlet of the agricultural crop processing system. In the illustrated embodiment, the feeder floor 124 includes an opening 128, and the transparent panel 316 of the corn ear monitoring system 300 is disposed within the opening 128 and coupled to the feeder floor 124. The transparent panel 316 has a first side and a second side. The first side is configured to contact an ear of corn that is being moved along the feeder floor 124 by the feeder 120.

As previously discussed, the camera of the corn ear monitoring system is positioned on the second side of the transparent panel 316 at a distance from the first side of the transparent panel 316. The camera is configured to output a signal indicative of an image of the ear of corn in contact with the first side of the transparent panel 316. In addition, the controller of the corn ear monitoring system is configured to receive the signal indicative of the image of the ear of corn, and the controller is configured to determine a determined width of the ear of corn based on the distance and a monitored width of the ear of corn within the image. While the corn ear monitoring system includes a single transparent panel in the illustrated embodiment, in other embodiments, the corn ear monitoring system may include multiple transparent panels and a corresponding number of cameras. Furthermore, while the transparent panel is coupled to the feeder floor in the illustrated embodiment, in other embodiments, one or more transparent panel(s) may be coupled to other suitable portion(s) of the agricultural harvester (e.g., alone or in combination with the feeder floor), such as the frame of the corn header (e.g., to facilitate monitoring ears of corn being moved by an auger), the chassis of the agricultural harvester (e.g., to facilitate monitoring ears of corn moving into the crop processing system), other suitable portion(s) of the agricultural harvester, or a combination thereof.

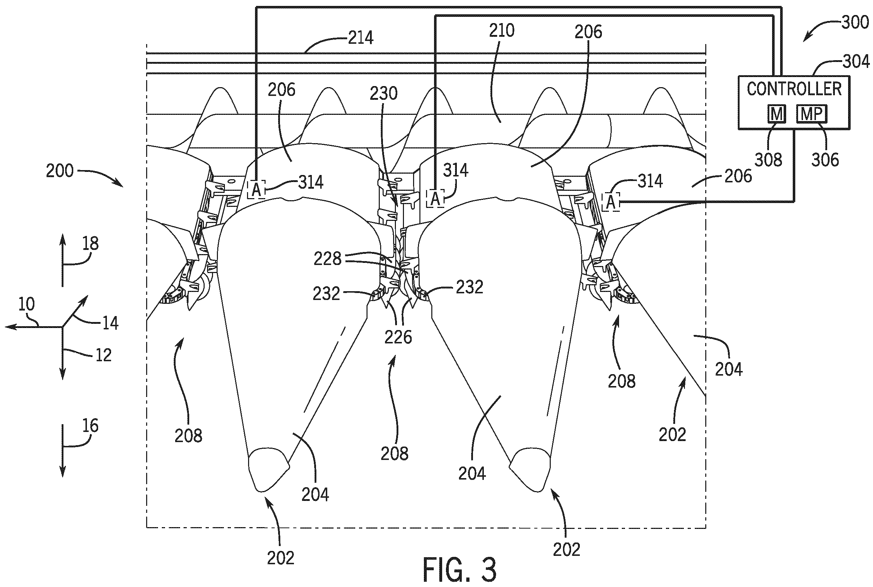

FIG. 3 is a perspective front view of a portion of the corn header 200 of FIG. 2. As previously discussed, the corn header 200 includes multiple dividers 204 that direct the crops into the row units 208. Each row unit 208 is configured to separate the corn ear from the stalk, carry the corn ear toward the respective auger 210, and direct the stalk to the field. As illustrated, each row unit 208 includes a pair of feed rollers 226 configured to grip the stalk and to rotate in opposite directions, thereby driving the stalk rearwardly (e.g., along the rearward direction 18) and toward the field (e.g., vertically downward, below the corn header 200). Each row unit 208 also includes a pair of deck plates 228 positioned over the pair of feed rollers 226. Each deck plate 228 extends along the longitudinal axis 12 of the corn header 200, and the pair of deck plates 228 are separated from one another along the lateral axis 10 of the corn header 200 to define a gap 230. Furthermore, each row unit 208 includes a pair of chains 232 (e.g., with lugs) that are configured to drive or push the corn ear along the pair of deck plates 228 toward the respective auger 210. Each hood 206 is positioned rearward of each divider 204 and between adjacent row units 208 to cover various components, such as the actuator(s) that controls the deck plates 228, linkage(s), and so forth. While each row unit includes feed rollers 226 and chains 232 in the illustrated embodiment, in other embodiments, at least one row unit may include other/-additional suitable component(s) configured to facilitate separating the ear of corn from the stalk, directing the ear of corn to the respective auger, and directing the stalk toward the surface of the agricultural field.

In the illustrated embodiment, the corn ear monitoring system 300 includes one or more actuators 314 configured to drive the deck plates 228 of each row unit 208 to move toward and away from one another along the lateral axis 10 of the corn header 200 to change a size (e.g., width) of the gap 230 between the deck plates 228. In the illustrated embodiment, an actuator 314 is configured to drive each pair of deck plates 228 to move. However, in other embodiments, an actuator may be configured to drive each deck plate to move, such that the number of actuators is equal to the number of deck plates. Furthermore, in certain embodiments, a single actuator may be configured to drive multiple pairs of deck plates to move, such that the deck plates of the multiple pairs are move together. Each actuator 314 may include any suitable type(s) of actuation device(s), such as hydraulic cylinder(s), pneumatic cylinder(s), hydraulic motor(s), pneumatic motor(s), electric motor(s), electric linear actuator(s), other suitable type(s) of actuation device(s), or a combination thereof.

As discussed in detail below, the controller 304 is configured to receive an image of an ear of corn in contact with the first side of the transparent panel from the camera positioned on the second side of the transparent panel. The controller 304 is also configured to determine a determined width of the ear of corn based on the distance between the camera and the first side of the transparent panel and a monitored width of the ear of corn within the image. By determining the determined width of the ear of corn based on the distance between the camera and the first side of the transparent panel and the monitored width of the ear of corn within the image, the controller 304 may determine a substantially more accurate corn ear width (e.g., as compared to determining the corn ear width based on the monitored width alone). In certain embodiments, the controller 304 is configured to control the actuator(s) 314 based on the determined width of the ear of corn. As a result, each row unit 208 may effectively block ears of corn from passing through the gap 230 between the deck plates 228 while enabling the stalk to pass through the gap 230, thereby enhancing the efficiency of the harvesting operation.

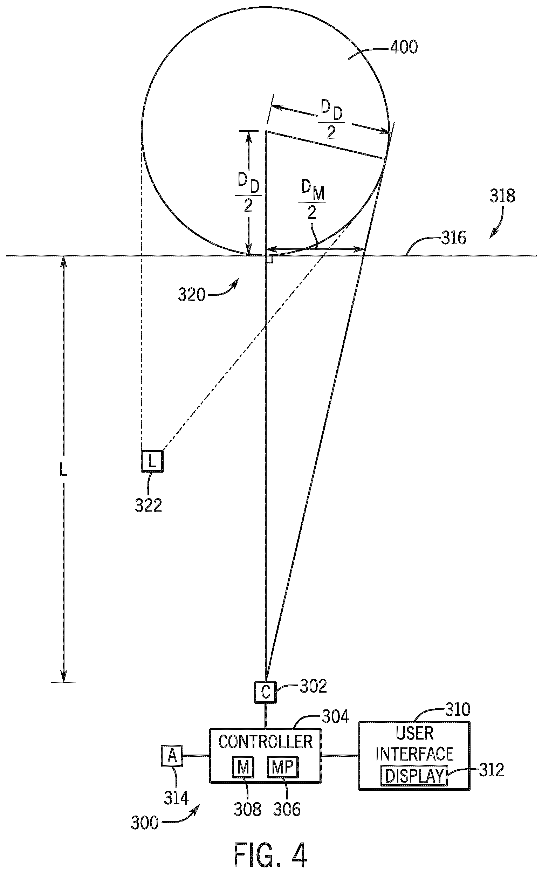

FIG. 4 is a schematic diagram of an embodiment of a corn ear monitoring system 300 that may be employed within the agricultural harvester of FIG. 1. As previously discussed, the corn ear monitoring system 300 includes the transparent panel 316, the camera 302, the controller 304, and the actuator(s) 314. As illustrated, the transparent panel 316 has a first side 318 and a second side 320, in which the first and second sides are opposite sides of the transparent panel. The first side 318 is configured to contact an ear of corn 400, and the camera 302 is positioned on the second side 320. As previously discussed, the transparent panel 316 is coupled to a portion of the agricultural harvester, such as the feeder floor. The transparent panel 316 may be formed from any suitable transparent material(s) (e.g., glass, plastic, quartz, etc.). In addition, the transparent panel 316 may have any suitable thickness (e.g., distance between the first side 318 and the second side 320), such as 2 mm, 5 mm, 10 mm, etc. Furthermore, the transparent panel 316 may include multiple layers of transparent material(s) (e.g., in direct contact with one another, separated by an air-filled gap, separated by a gas-filled gap, etc.).

As illustrated, the camera 302 is positioned a distance L from the first side 318 of the transparent panel 316. For example, in certain embodiments, the camera 302 includes a lens (e.g., which may include a single lens or a lens system) and an image sensor, and the lens is positioned between the image sensor and the transparent panel 316. In such embodiments, the distance L may extend between the first side 318 of the transparent panel 316 and an optical center of the lens (e.g., the optical center of the lens of the camera is positioned the distance L from the first side of the transparent panel). For example, the distance L may be equal to the distance between the first side 318 of the transparent panel 316 and the plane of the image sensor minus the focal length of the lens.

As previously discussed, the camera 302 is configured to output a signal indicative of an image of the ear of corn 400 in contact with the first side 318 of the transparent panel 316. In addition, the controller 304 is configured to receive the signal indicative of the image of the ear of corn 400, and the controller 304 is configured to determine a determined width $D_D$ of the ear of corn 400 based on the distance L and a monitored width $D_M$ of the ear of corn 400 within the image. For example, the controller 304 may determine the monitored width $D_M$ of the ear of corn 400 within the image by determining a number of pixels across the width of the ear of corn 400 within the image and converting the number of pixels to the monitored width $D_M$ based on the number of pixels per unit distance (e.g., mm, cm, inch, etc.). The number of pixels per unit distance may be determined (e.g., during a manufacturing process) by placing a calibration sheet on the first side 318 of the transparent panel 316, in which the calibration sheet has markings corresponding to the unit distance. The number of pixels between the markings may be counted to determine the number of pixels per unit distance. In certain embodiments, the number of pixels per unit distance may vary between a vertical axis and a horizontal axis of the image. In such embodiments, the number of pixels per unit distance may be determined for both the vertical axis and the horizontal axis, and the controller may determine the monitored width of the ear of corn within the image based on the number of pixels across the width of the ear of corn, the number of pixels per unit distance for the vertical axis, and the number of pixels per unit distance for the horizontal axis.

In certain embodiments, the controller 304 is configured to determine the determined width $D_D$ using the formula:

$$D_D = \frac{1}{2L} D_M \left( \sqrt{D_M{}^2 + 4L^2} + D_M \right)$$

where $D_D$ is the determined width, L is the distance between the camera and the first side of the transparent panel, and $D_M$ is the monitored width. By determining the determined width $D_D$ of the ear of corn 400 based on the distance L between the camera 302 and the first side 318 of the transparent panel 316 and the monitored width $D_M$ of the ear of corn 400 within the image, the controller 304 may determine a substantially more accurate corn ear width (e.g., as compared to determining the corn ear width based on the monitored width alone). While the controller is configured to determine the determined width $D_D$ using the formula above in certain embodiments, in other embodiments, the controller may determine the determined width of the ear of corn based on the distance and the monitored width using another suitable technique (e.g., empirical formula, lookup table, etc.).

Once the determined width of the ear of corn is determined, the controller 304 may control the display 312 of the user interface 310 to present a visual representation of the determined width to the operator (e.g., a numerical value of the determined width). Furthermore, in certain embodiments, the controller 304 is configured to control the actuator(s) 314 to adjust a spacing between the deck plates of each row unit of the header based on the determined width of the ear of corn. For example, while harvesting ears of corn having larger determined widths, the controller 304 may control the actuator(s) 314 to increase the spacing between the deck plates of each row unit, and while harvesting ears of corn having smaller determined widths, the controller 304 may control the actuator(s) 314 to decrease the spacing between the deck plates of each row unit. As a result, each row unit may effectively block ears of corn from passing through the gap between the deck plates while enabling the stalk to pass through the gap, thereby enhancing the efficiency of the harvesting operation.

In certain embodiments, the controller 304 is configured to control the actuator(s) 314 to adjust the spacing between the deck plates of each row unit based on an average of a set of determined widths $D_D$. For example, the controller may determine a determined width for each ear of corn that contacts the first side of the transparent panel (e.g., in which an entire width of the ear of corn is visible to the camera). The controller may average the determined widths over a desired number of ears (e.g., 2, 3, 4, 5, 6, 7, 8, 9, 10, or more). The controller may also update the average as each new ear of corn is monitored, thereby determining a rolling or moving average of the determined widths. In addition, in certain embodiments, the controller may filter/cull any determined width that is outside of a threshold range. For example, in determining the average, the controller may not include any determined width that is larger than a maximum threshold value, and the controller may not include any determined width that is smaller than a minimum threshold value.

In certain embodiments, the controller 304 is configured to compensate for distortion of the image due to a lens of the camera 302. For example, the lens may cause the camera to have a curved field of view. Because the camera 302 has a curved field of view and the transparent panel 316 is flat, the number of pixels per unit distance may vary across the image, thereby creating the distortion. For example, the number of pixels per unit distance may be larger at the center of the image and smaller at the periphery of the image. In certain embodiments, the controller 304 may apply a distortion correction to the image to enhance the accuracy of the monitored width of the ear of corn. For example, the controller may apply a manual distortion correction based on the properties of the lens of the camera. Alternatively, the controller may apply an automatic distortion correction based on a calibration process. The calibration process may include placing a calibration sheet on the first side of the transparent panel, in which the calibration sheet includes a grid of vertical and horizontal lines that are spaced apart from one another by a selected distance. During a calibration process (e.g., during manufacture of the corn ear monitoring system), the camera may output a signal indicative of the image of the calibration sheet to the controller, and the controller may receive the signal and determine the automatic distortion correction based on the image. The distortion correction (e.g., manual distortion correction or automatic distortion correction), once applied to the image, may establish a consistent number of pixels per unit distance across the image (e.g., along the vertical axis of the image and along the horizontal axis of the image), thereby enhancing the accuracy of the monitored width of the ear of corn.

Furthermore, in certain embodiments, the controller may compensate for the distortion by determining multiple sample widths based on the distance between the camera and the first side of the transparent panel and the monitored width of the ear of corn within multiple images (e.g., using the equation above), and averaging the sample widths to determine the determined width. For example, as the ear of corn moves across the first side of the transparent panel, the camera may output signals indicative of multiple images. Accordingly, in certain image(s), the width of the ear of corn may be closer to the center of the image, and in certain image(s), the width of the ear of corn may be farther from the center of the image. As such, the monitored width and, therefore, the sample width of the ear of corn may vary as the ear of corn moves along the first side of the transparent panel. By averaging the sample widths to determine the determined width, the distortion caused by the lens of the camera may be averaged, thereby effectively compensating for the distortion. As a result, the accuracy of the determined width may be enhanced (e.g., as compared to determining the determined width from a single image, in which the ear of corn may be located at any position relative to the center of the image).

In the illustrated embodiment, the corn ear monitoring system 300 includes a light source 322 configured to illuminate the ear of corn 400. The light source 322 may include any suitable type of light emitter(s), such as one or more light-emitting diodes, one or more incandescent light bulbs, one or more fluorescent light bulbs, etc. Furthermore, the light source 322 may include any suitable number of light emitter(s). In the illustrated embodiment, the light source is positioned on the second side 320 of the transparent panel 316. However, in other embodiments, the light source may be positioned on the first side of the transparent panel, or the light source may include at least one light emitter positioned on the first side of the transparent panel and at least one light emitter positioned on the second side of the transparent panel. While the corn ear monitoring system 300 includes the light source 322 configured to illuminate the ear of corn 400 in the illustrated embodiment, in other embodiments, the light source may be omitted.

In certain operating conditions, the husk of the ear of corn may be removed from the kernels before the ear of corn contacts the transparent panel. In such operating conditions, the controller may be configured to control the actuator(s) to adjust the spacing between the deck plates of each row unit based on the determined width of an ear of corn without a husk. In addition, in certain operating conditions, the husk may be attached to the kernels while the ear of corn contacts the transparent panel. In such operating conditions, the controller may be configured to control the actuator(s) to adjust the spacing between the deck plates of each row unit based on the determined width of an ear of corn with a husk. In certain embodiments, the operator may provide an input to the user interface indicating whether the husks are attached. Furthermore, in certain embodiments, the controller may be configured to automatically detect whether the husks are attached (e.g., based on the color of the ears of corn).

While the corn ear monitoring system is disclosed above with regard to monitoring an ear of corn moving between a row unit of the header and the crop processing system of the agricultural harvester, in certain embodiments, the corn ear monitoring system may be configured to monitor ears of corn within other locations of the agricultural harvester. For example, in certain embodiments, the corn ear monitoring system may be configured to monitor ears of corn within the crop processing system. In such embodiments, the transparent panel may be coupled to a rotor cage of the crop processing system (e.g., portion of the agricultural harvester), and the camera may be positioned on a side (e.g., second side) of the transparent panel opposite the side (e.g., first side) facing the ears of corn. Furthermore, in certain embodiments, the corn ear monitoring system may be configured to monitor the cobs of ears of corn exiting the crop residue handling system. In such embodiments, the transparent panel may be coupled to a straw hood of the residue handling system (e.g., portion of the agricultural harvester), and the camera may be positioned on a side (e.g., second side) of the transparent panel opposite the side (e.g., first side) facing the cobs of the ears of corn. In addition, in certain embodiments, the corn ear monitoring system may be configured to monitor kernels of ears of corn output by the crop processing system. In such embodiments, the transparent panel may be coupled to an elevator (e.g., portion) of the agricultural harvester, and the camera may be positioned on a side (e.g., second side) of the transparent panel opposite the side (e.g., first side) facing the kernels of the ears of corn. For each of the embodiments disclosed above, the controller of the corn ear monitoring system may receive the image of the ear of corn (e.g., a cob of the ear of corn, a kernel of the ear of corn) in contact with the first side of the transparent panel from the camera positioned on the second side of the transparent panel, and determine the determined width of the ear of corn (e.g., a cob of the ear of corn, a kernel of the ear of corn) based on the distance between the camera and the first side of the transparent panel and the monitored width of the ear of corn (e.g., a cob of the ear of corn, a kernel of the ear of corn) within the image, as disclosed above (e.g., using the formula above).

Furthermore, while the controller 304 includes a single control device in the illustrated embodiment, in other embodiments, the controller may include multiple control devices (e.g., positioned in different locations throughout the agricultural harvester). In embodiments in which the controller includes multiple control devices, each control device may perform one or more functions of the controller disclosed above. For example, in certain embodiments, a first control device may be configured to receive the signal indicative of the image of the ear of corn and determine the determined width of the ear of corn based on the monitored width of the ear of corn within the image and the distance between the camera and the first side of the transparent panel, and a second control device may be configured to control the actuator(s) based on the determined width of the ear of corn.

**Claims**

1.  A corn ear monitoring system (300) for an agricultural harvester (100), **characterized in that** the corn ear monitoring system (300) comprises:
a controller (304) comprising a memory (308) and a processor (306), wherein the controller (304) is configured to:

    receive an image of an ear of corn (400) in contact with a first side (318) of a transparent panel (316) from a camera (302) positioned on a second side (320) of the transparent panel (316); and
    determine a determined width ($D_D$) of the ear of corn (400) based on a distance (L) between the camera (302) and the first side (318) of the transparent panel (316) and a monitored width ($D_M$) of the ear of corn (400) within the image.

2.  The corn ear monitoring system (300) of claim 1, wherein the controller (304) is configured to determine the determined width ($D_D$) using the formula:

$$D_D = \frac{1}{2L} D_M \left( \sqrt{D_M{}^2 + 4L^2} + D_M \right)$$

where $D_D$ is the determined width ($D_D$), L is the distance (L) between the camera (302) and the first side (318) of the transparent panel (316), and $D_M$ is the monitored width ($D_M$).

3.  The corn ear monitoring system (300) of any of claims 1-2, wherein the controller (304) is configured to compensate for distortion of the image due to a lens of the camera (302).

4.  The corn ear monitoring system (300) of claim 3, wherein the controller (304) is configured to compensate for the distortion by:

    determining a plurality of sample widths based on the distance (L) between the camera (302) and the first side (318) of the transparent panel (316) and the monitored width ($D_M$) of the ear of corn (400) within a plurality of images including the image; and
    average the plurality of sample widths to determine the determined width ($D_D$).

5.  The corn ear monitoring system (300) of any of claims 1-4, wherein the controller (304) is configured to control an actuator (314) to adjust a spacing between deck plates (228) of a row unit (208) of a header (200) of the agricultural harvester (100) based on the determined width ($D_D$) of the ear of corn (400).

6.  The corn ear monitoring system (300) of claim 5, wherein the controller (304) is configured to control the actuator (314) to adjust the spacing between the deck plates (228) of the row unit (208) based on an average of a plurality of determined widths including the determined width ($D_D$).

7.  The corn ear monitoring system (300) of any of claims 5-6, comprising the actuator (314) communicatively coupled to the controller (304).

8.  The corn ear monitoring system (300) of any of claims 1-7, comprising the transparent panel (316) having the first side (318) and the second side (320), wherein the first side (318) is configured to contact the ear of corn (400).

9.  The corn ear monitoring system (300) of any of claims 1-8, comprising the camera (302) positioned on the second side (320) of the transparent panel (316) at the distance (L) from the first side (318) of the transparent panel (316), wherein the camera (302) is configured to output a signal indicative of the image of the ear of corn (400) in contact with the first side (318) of the transparent panel (316), and the camera (302) is communicatively coupled to the controller (304).

10. The corn ear monitoring system (300) of any of claims 1-9, comprising a light source (322) configured to illuminate the ear of corn (400).

11. The agricultural harvester (100), comprising the corn ear monitoring system (300) of any of claims 1-10.

12. The agricultural harvester (100) of claim 11, wherein the transparent panel (316) is coupled to a portion of the agricultural harvester (100).

13. The agricultural harvester (100) of claim 12, wherein the portion comprises a feeder house (118).

100

200

314

A

302

C

118

106

104
108

110

112

102

114

116

CONTROLLER

M  P

USER
INTERFACE

DISPLAY

304

308

300

310

312

306 14

16

12

10

FIG. 1

FIG. 2

FIG. 3

EP 4 686 394 A1

FIG. 4

Europäisches
Patentamt

European
Patent Office

Office européen
des brevets

## EUROPEAN SEARCH REPORT

**Application Number**

EP 25 19 2670

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2024/130279 A1 (BOMLENY DUANE M [US] ET AL) 25 April 2024 (2024-04-25) * figures 1,5,6 * * paragraphs [0026] - [0045] * ----- | 1-13 | INV. A01D41/127 A01D45/02 |
| A | US 2016/113199 A1 (JONGMANS DRE [NL] ET AL) 28 April 2016 (2016-04-28) * the whole document * ----- | 1-3 | |
| A | US 2024/122111 A1 (HEIMS TROY M [US] ET AL) 18 April 2024 (2024-04-18) * the whole document * ----- | 1-13 | |

TECHNICAL FIELDS
SEARCHED (IPC)

A01D

The present search report has been drawn up for all claims

| Place of search | Date of completion of the search | Examiner |
|---|---|---|
| Munich | 20 October 2025 | Bongibault, Patrick |

EPO FORM 1503 03.82 (P04C01)

## ANNEX TO THE EUROPEAN SEARCH REPORT
## ON EUROPEAN PATENT APPLICATION NO.

EP 25 19 2670

This annex lists the patent family members relating to the patent documents cited in the above-mentioned European search report.
The members are as contained in the European Patent Office EDP file on
The European Patent Office is in no way liable for these particulars which are merely given for the purpose of information.

20-10-2025

| Patent document cited in search report | Publication date | Patent family member(s) | Publication date |
|---|---|---|---|
| US 2024130279 A1 | 25-04-2024 | DE 102023127392 A1 | 25-04-2024 |
| | | US 2024130279 A1 | 25-04-2024 |
| US 2016113199 A1 | 28-04-2016 | BE 1022164 B1 | 22-02-2016 |
| | | BR 102015026404 A2 | 03-05-2016 |
| | | EP 3014973 A1 | 04-05-2016 |
| | | US 2016113199 A1 | 28-04-2016 |
| US 2024122111 A1 | 18-04-2024 | EP 4353068 A1 | 17-04-2024 |
| | | US 2024122111 A1 | 18-04-2024 |

EPO FORM P0459

For more details about this annex : see Official Journal of the European Patent Office, No. 12/82